# EUROPEAN PATENT SPECIFICATION

(11) **EP 4 331 813 B1**
(45) Date of publication and mention of the grant of the patent: **01.10.2025**
(21) Application number: 21938821.2
(22) Date of filing: 30.08.2021
(51) Int. Cl.: G06T 15/04, G06T 19/20, B29C 64/393, B29C 64/386, B33Y 50/02

(54) **SLICING METHOD, PRINTING METHOD, AND DEVICE AND APPARATUS FOR MAPPING THREE-DIMENSIONAL MODEL**
SCHNEIDEVERFAHREN, DRUCKVERFAHREN SOWIE VORRICHTUNG UND VORRICHTUNG ZUR ABBILDUNG EINES DREIDIMENSIONALEN MODELLS
PROCÉDÉ DE DÉCOUPAGE EN TRANCHES, PROCÉDÉ D'IMPRESSION, ET DISPOSITIF ET APPAREIL POUR MODÈLE TRIDIMENSIONNEL DE MAPPAGE

(30) Priority: 27.04.2021 CN 202110462298
(43) Date of publication of application: 06.03.2024
(73) Proprietor: Zhuhai Sailner 3D Technology Co., Ltd., Zhuhai, Guangdong 519000 (CN)
(72) Inventor: LV, Rusong, Zhuhai, Guangdong 519000 (CN); WAN, Wenchun, Zhuhai, Guangdong 519000 (CN); CHEN, Wei, Zhuhai, Guangdong 519000 (CN); XIANG, Dongqing, Zhuhai, Guangdong 519000 (CN); WU, Yongrun, Zhuhai, Guangdong 519000 (CN)
(74) Representative: Elzaburu S.L.P.
(86) International application number: PCT/CN2021/115458
(87) International publication number: WO 2022/227357

(56) References cited:
- EP-A1- 3 599 076
- WO-A1-2015/007770
- WO-A1-2018/197531
- CN-A- 110 757 804
- CN-A- 110 757 804
- CN-A- 111 383 351
- CN-A- 112 102 460
- CN-A- 113 183 469
- TW-A- 201 838 797
- ZA-B- 972 205
- VIDIMCE KIRIL ET AL: "OpenFab", ACM TRANSACTIONS ON GRAPHICS, ACM, NY, US, vol. 32, no. 4, 21 July 2013 (2013-07-21), pages 1 - 12, XP059141355, ISSN: 0730-0301, DOI: 10.1145/2461912.2461993

## Description

### TECHNICAL FIELD

Embodiments of the present application relate to a field of three dimensional printing technology, and in particular, to a slicing method, a printing method and an apparatus for a mapping three dimensional model, and a device.

### BACKGROUND

The three dimensional printing system may print based on the three dimensional model designed by the designer, thereby obtaining the corresponding three dimensional object. In order to print the three dimensional object, the data of the three dimensional model may be sliced, each slice may define a part of the material layer, which will be solidified or agglomerated by the three dimensional printing system based on the relevant definition of the slice.

However, the current slicing algorithm is unable to slice the mapping three dimensional model, resulting that the mapping three dimensional model cannot be printed in color, the user needs to manually color according to the need, and the printing integrity of the mapping three dimensional model is poor and inefficient, which cannot meet the user need.

CN 110757804 A discloses a full-color layered slicing algorithm based on a three-dimensional texture mapping model, including: parsing a three-dimensional model file of texture mapping, establishing a triangular mesh adjacent topological relationship based on color information, achieving quick query of triangular mesh adjacent information of the color information; achieving fast intersection operation between the triangular mesh of the color information and the tangent plane, obtaining the position coordinates and texture coordinates of all vertexes in each layer, sequentially connecting the vertexes to form a full-color two-dimensional outline, and filling the outline and generating full-color map.

Kiril Vidimče et al.: "OpenFab: A Programmable Pipeline for Multi-Material Fabrication , ACM Transactions on Graphics, vol. 32 no. 4, July 2013, DOI:10.1145/2461912.2461993, discloses the OpenFab, a programmable pipeline for synthesis of multi-material 3D printed objects.

### SUMMARY

The present invention is set out in the appended set of claims. Embodiments of the present application provides a slicing method, a printing method and an apparatus for a mapping three dimensional model and a device, for the mapping three dimensional model, the color corresponding to the contour area corresponding to the respective slicing plane is determined through the texture information in the file, thus achieving color printing of the mapping three dimensional model with high printing integrity and efficiency.

In a first aspect, the invention provides a slicing method for a mapping three dimensional model, the method includes: parsing a file of the mapping three dimensional model to obtain respective polygonal patches for representing the mapping three dimensional model, where at least one polygonal patch includes texture information of the mapping three dimensional model; slicing the respective polygonal patches using a slicing plane to obtain at least one outer contour line corresponding to the slicing plane; obtaining a contour area according to the at least one outer contour line and filling the contour area; and generating, according to the texture information, full color image data for coloring the filled contour area.

The obtaining the contour area according to the at least one outer contour line includes: contracting a respective outer contour line based on a set mapping thickness to obtain an inner contour line; and performing an exclusive OR operation on an area corresponding to the respective outer contour line and an area corresponding to the inner contour line corresponding to the respective outer contour line to obtain a respective contour area.

After the contracting the respective outer contour line based on the set mapping thickness to obtain the inner contour line, the method further includes: for each outer contour line, obtaining an associated outer contour line corresponding to a preset number of slicing plane above and below the slicing plane corresponding to the outer contour line based on the set mapping thickness and a set slicing thickness. Correspondingly, the performing the exclusive OR operation on the area corresponding to the respective outer contour line and the area corresponding to the inner contour line corresponding to the respective outer contour line to obtain the respective contour area includes: after performing an AND operation on the area corresponding to the inner contour line and an area corresponding to a respective associated outer contour line, performing the exclusive OR operation with the area corresponding to the corresponding outer contour line to obtain the respective contour area.

Optionally, the generating, according to the texture information, the full color image data for coloring the filled contour area includes: mapping the filled contour area to an image according to a resolution of the image; obtaining a pixel coordinate of a respective pixel point of the filled contour area in the image; determining a spatial coordinate of a respective point in the filled contour area according to the pixel coordinate corresponding to the respective point; determining a color value of the respective pixel point of the filled contour area in the image according to the spatial coordinate of the respective point in the filled contour area and the texture information; and generating, according to the color value of the respective pixel point of the filled contour area in the image, the full color image data for coloring the filled contour area.

Optionally, the parsing the file of the mapping three dimensional model includes: obtaining the file of the mapping three dimensional model, where the file of the mapping three dimensional model includes a texture library of the mapping three dimensional model, vertex coordinates of respective vertexes, and a polygon index; determining spatial coordinates of respective vertexes of the respective polygonal patches according to the vertex coordinates and the polygon index; and traversing the texture library according to the polygon index to obtain texture information of the respective vertexes of the respective polygonal patches.

Optionally, the traversing the texture library according to the polygon index to obtain the texture information of the respective vertexes of the respective polygonal patches includes:
determining a texture file corresponding to the respective polygonal patches according to the polygon index; for each vertex of each polygonal patch, when the vertex coordinate of the vertex includes a vertex texture coordinate, obtaining a texture image from the texture file, and determining the texture information of the vertex from the texture image according to the vertex texture coordinate of the vertex; and/or, for each vertex of each polygonal patch, when the vertex coordinate of the vertex does not comprise a vertex texture coordinate, obtaining a diffuse light color value in the texture file, and determining the texture information of the vertex as the diffuse light color value.

Optionally, the slicing the respective polygonal patches using the slicing plane to obtain at least one outer contour line corresponding to the slicing plane includes: performing an intersection operation on respective polygonal patches and the slicing plane to obtain respective intersection points; and connecting the respective intersection points end-to-end to obtain the at least one outer contour line corresponding to the slicing plane.

Optionally, before the performing the intersection operation on the respective polygonal patches and the slicing plane to obtain the respective intersection points, the method further includes: grouping and sorting the respective polygonal patches according to a spatial coordinate of a slicing direction corresponding to a polygonal patch to obtain a grouping relation matrix, where the grouping relation matrix includes each group of the polygonal patches corresponding to each slicing plane. Correspondingly, the performing the intersection operation on the respective polygonal patches and the slicing plane to obtain the respective intersection points includes: performing an intersection operation on each group of polygonal patches and a corresponding slicing plane to obtain the respective intersection points.

Optionally, after the obtaining the respective polygonal patches for representing the mapping three dimensional model, the method further includes: sampling the respective polygonal patches to obtain a point cloud information set, where the point cloud information set includes a spatial coordinate and texture information of each sampling point. Correspondingly, the generating, according to the texture information, the full color image data for coloring the filled contour area includes: determining a color value of a respective point of the filled contour area according to the point cloud information set and a spatial coordinate of the respective point in the filled contour area; and generating, according to the color value of the respective point of the filled contour area, the full color image data for coloring the filled contour area.

Optionally, after the obtaining the respective polygonal patches for representing the mapping three dimensional model, the method further includes: for each polygonal patch, determining a respective adjacent polygonal patch of the polygonal patch, where the adjacent polygonal patch is connected to one of edges of the polygonal patch; generating a polygon topology structure according to the respective polygonal patch and the adjacent polygonal patch corresponding to the respective polygonal patch. Correspondingly, the slicing the respective polygonal patches using the slicing plane to obtain the at least one outer contour line corresponding to the slicing plane includes: slicing respective polygonal patches using the slicing plane to obtain intersection points between the slicing plane and the respective polygonal patches; and determining a connection order of the respective intersection points according to the polygon topology structure to obtain the at least one outer contour line corresponding to the slicing plane.

Optionally, the filling the contour area includes: filling the contour area based on an inverse color filling algorithm.

In a second aspect, an embodiment of the present application provides a The first aspect of the invention further provides: obtaining slice image data, where the slice image data includes the full color image data generated by the slicing method for the mapping three dimensional model provided according to any one of the embodiments corresponding to the first aspect of the present invention, generating print control data according to the slice image data to print the mapping three dimensional model based on the print control data.

In a second aspect, the invention further provides a three dimensional printing device, including: a memory and at least one processor; the memory stores computer executable instructions; and the at least one processor executes the computer executable instructions stored in the memory to enable the at least one processor to execute the slicing and printing method for the mapping three dimensional model provided in any embodiments of the present application.

In a third aspect, the invention further provides a computer readable storage medium storing a computer executable instruction, when the computer executable instruction is executed by a processor, the slicing and printing method for the mapping three dimensional model provided in any embodiments of the present application is implemented.

In the slicing and printing method and the device provided in embodiments of the present invention, for the mapping three dimensional model, respective polygonal patches are obtained by parsing the file of the mapping three dimensional model, where at least one polygonal patch includes texture information of the mapping three dimensional model, the respective polygonal patches are sliced using a slicing plane, the respective intersecting points is connected end-to-end to obtain an outer contour line corresponding to the slicing plane, a contour area is obtained by contracting the outer contour line, the contour area is filled, and full color image data for coloring the respective contour area is generated based on the above texture information, and a colored mapping three dimensional model entity may be directly obtained by three dimensional printing based on the full color image data, so as to realize the automatic printing and colored printing of the mapping three dimensional model, and improve the printing efficiency and printing quality of the mapping three dimensional model.

### BRIEF DESCRIPTION OF DRAWINGS

Accompanying drawings here are incorporated into the description and form a part of the description, show embodiments in accordance with the present application, and are used together with the description to explain the principle of the present application.
FIG. 1 is an application scenario diagram of a slicing method for a mapping three dimensional model provided in an embodiment of the present application.
FIG. 2 is a flowchart of a slicing method for a mapping three dimensional model provided in an embodiment of the present application.
FIG. 3 is a schematic diagram of a polygonal patch in the embodiment shown in FIG. 2 of the present application.
FIG. 4 is a schematic diagram of an intersection of the polygonal surface P in the embodiment shown in FIG. 3 of the present application and a slicing plane.
FIG. 5 is a flowchart of S201 shown in the embodiment shown in FIG. 2 of the present application.
FIG. 6 is a schematic diagram of sampling the polygonal patch in the embodiment shown in FIG. 3 of the present application.
FIG. 7 is a flowchart of a slicing method for a mapping three dimensional model provided in another embodiment of the present application.
FIG. 8 is a schematic diagram of a contour area in the embodiment shown in FIG. 7 of the present application.
FIG. 9 is another schematic diagram of a contour area in the embodiment shown in FIG. 7 of the present application.
FIG. 10 is a flowchart of a printing method for a mapping three dimensional model provided in an embodiment of the present application.
FIG. 11 is a structural schematic diagram of a slicing apparatus for a mapping three dimensional model provided in an embodiment of the present application.
FIG. 12 is a structural schematic diagram of a three dimensional printing device provided in an embodiment of the present application.

Through the above accompanying drawings, definite embodiments of the present application have been shown, and more detailed descriptions will be provided in the following. These accompanying drawings and textual descriptions are not intended to limit the scope of the concept of the present application in any way, but rather to illustrate the concept of the present application to those skilled in the art by referring to a specific embodiment.

### DESCRIPTION OF EMBODIMENTS

Exemplary embodiments will be described in detail herein, examples of which are represented in the accompanying drawings. When the following description relates to the accompanying drawings, unless otherwise indicated, the same numbers in different accompanying drawings indicate the same or similar elements. Implementations described in the following exemplary embodiments do not represent all embodiments consistent with the present application. In contrary, they are only examples of apparatuses and methods that are consistent with some aspects of the present application as detailed in the attached claims.

The following is a detailed explanation of the technical solution of the present application and how it solves the above technical problem through specific embodiments. The following specific embodiments can be combined with each other, and the same or similar concepts or processes may not be repeated in some embodiments. The following will describe the embodiments of the present application in conjunction with the accompanying drawings.

The following is an explanation of the application scenario of an embodiment of the present application:

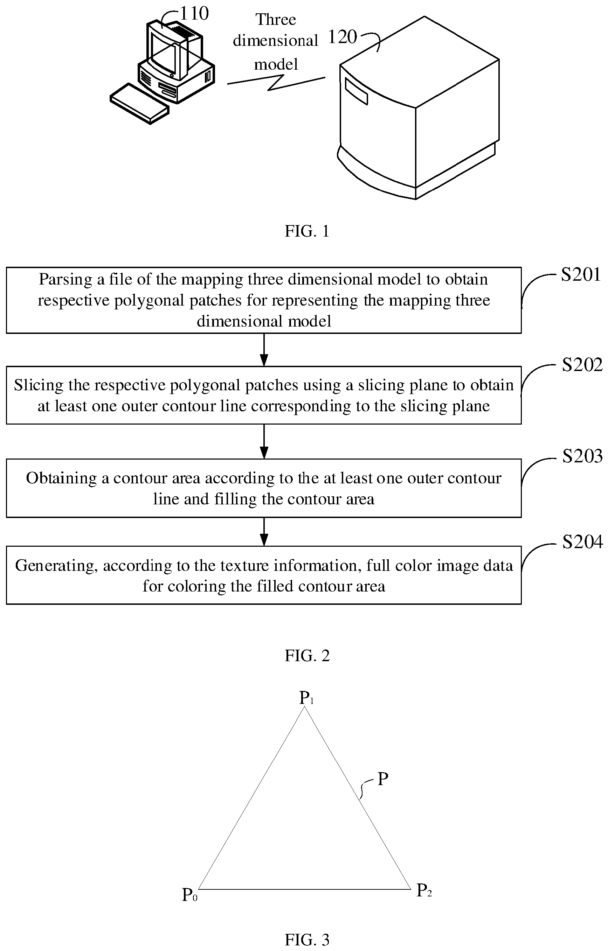

FIG. 1 is an application scenario diagram of a slicing method for a mapping three dimensional model provided in an embodiment of the present application, as illustrated in FIG. 1, a three dimensional printing system 100 generally includes a modeling platform 110 and a three dimensional printer 120, the modeling platform 110 is equipped with a modeling software such as 3dmax software, as well as a slicing software such as s3d software, the designer can generate three dimensional model data through the modeling software, furthermore, the three dimensional model data is sliced based on the slicing software to obtain printing data that can be recognized and executed by the three dimensional printer 120, thereby achieving the printing of the three dimensional model. It can be understood that the modeling software and/or the slicing software can also be integrated into the three dimensional printer to achieve integrated functions such as modeling, slicing, and printing.

For the mapping three dimensional model, it is necessary to reflect the texture mapping of the three dimensional object on the surface of the printed three dimensional model, in order to make the printed three dimensional model more similar to the entity and improve the realism of the three dimensional model. In the prior art, for the mapping three dimensional model, a three dimensional model that does not include texture mapping, such as a white three dimensional model, is often printed first, and then the three dimensional model is colored or mapped manually to obtain a colored three dimensional model. The printing efficiency of the above mapping three dimensional model is poor, and the mapping is time-consuming, and it is not possible to directly print the mapping three dimensional model with color.

In order to achieve a color printing of the mapping three dimensional model and improve printing efficiency, the present application provides a slicing method for a mapping three dimensional model, respective polygonal patches including texture information are obtained by parsing the file of the mapping three dimensional model, a respective outer contour line is obtained by slicing the respective polygonal patches, and then the contour area is obtained based on the outer contour line, and full color image data for coloring the above contour area is generated by combining with the above texture information, so as to achieve full color printing of the mapping three dimensional model based on the full color image data corresponding to the respective contour area, and improve the degree of automation and the efficiency for printing the mapping three dimensional model.

FIG. 2 is a flowchart of a slicing method for a mapping three dimensional model provided in an embodiment of the present application. The slicing method for a mapping three dimensional model may be applied to a three dimensional printing device or a three dimensional printing system, as shown in FIG. 2, the slicing method for the mapping three dimensional model provided in the embodiment includes the following steps.

S201, parsing a file of the mapping three dimensional model to obtain respective polygonal patches for representing the mapping three dimensional model.

The at least one polygonal patch includes texture information of the mapping three dimensional model. The texture information is information used for describing a color value of a respective point, such as a grayscale value and/or a color value, which can be represented by color models such as RGB and/or YUV. The file of the mapping three dimensional model may be saved in a memory of the three dimensional printing device, or transmitted externally to the 3D printing device, such as through a network, an interface, or other means. The file of the mapping three dimensional model may define at least a portion of the three dimensional geometric model of the object, including the shape and range of at least a portion of the object (such as an entity part) in the three dimensional coordinate system.

The polygonal patch is used for describing the texture and contour of the surface of the mapping three dimensional model, and the polygonal patch may include the spatial coordinate and texture information of the corresponding part of the mapping three dimensional model. The shape of the polygonal patch may be a shape of a triangle, or a quadrilateral, among other shapes.

In some embodiments, the keyword to be parsed in the file of the mapping three dimensional model includes v (vertex spatial coordinate), vt (vertex texture coordinate), f (polygon index), mtllib (texture library), kd (diffuse reflective light), and so on.

Furthermore, a texture mapping between the spatial coordinate of a respective point on a respective polygonal patch of the mapping three dimensional model and the corresponding texture information may be established, so as to facilitate determining the texture information of the respective point in a subsequent step.

S202, slicing the respective polygonal patches using a slicing plane to obtain at least one outer contour line corresponding to the slicing plane.

The slicing direction corresponding to the slicing plane may be the X, Y, or Z axis direction, and there is a certain gap between adjacent slicing planes. The respective point on the outer contour line is an intersecting point of the corresponding slicing plane and the polygonal patch. The slicing plane defines that each slice is generated in a single layer manufactured layer by layer, and the contour line defines that the shape, range, and texture information of the entity part of the slice.

Specifically, the above polygonal patch is sliced through the respective slicing plane, so as to obtain the intersection points between the slicing plane and the polygonal patch, and obtaining the respective outer contour line corresponding to the respective slicing plane by connecting the respective intersection points end-to-end.

Furthermore, one slicing plane may correspond to one outer contour line or multiple outer contour lines.

Optionally, the slicing the respective polygonal patches based on the slicing plane to obtain at least one outer contour line includes:
performing an intersection operation on the polygonal patch and the slicing plane to obtain the respective intersection points; and connecting the respective intersection points end-to-end to obtain at least one the outer contour line.

Specifically, for each slicing plane, the respective intersection point between the slicing plane and the respective polygonal patches are obtained by finding the intersection between the slicing plane and the respective polygonal patches, and the outer contour lines corresponding to the polygonal patch and the slicing plane can be obtained by connecting the intersection points between each polygonal patch and the slicing plane end-to-end.

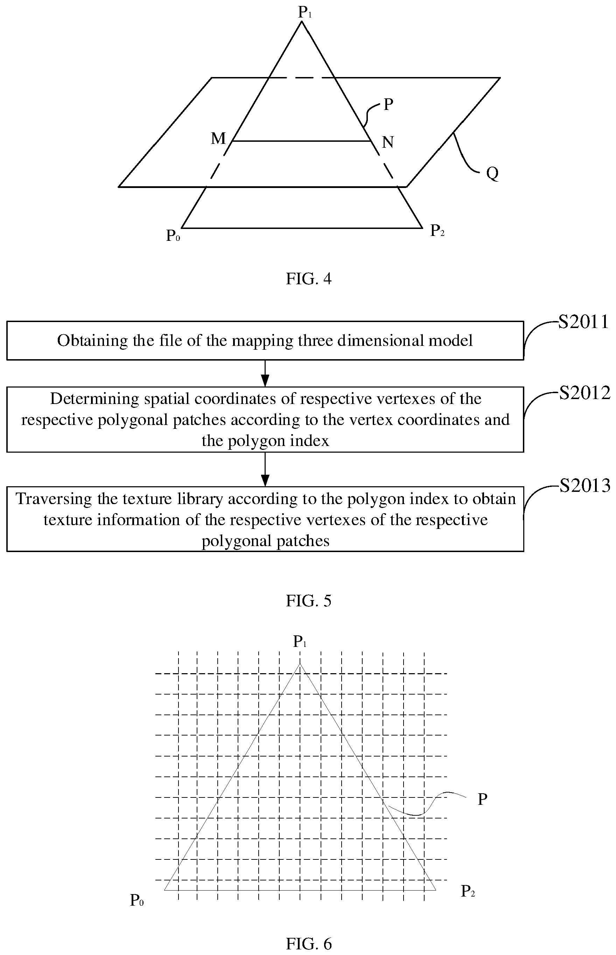

Exemplarily, FIG. 3 is a schematic diagram of a polygonal patch in the embodiment shown in FIG. 2 of the present application, as illustrated in FIG. 3. In FIG. 3, taking an example that the polygonal patch is a triangular patch, the triangular patch includes multiple vertices P₀, P₁, and P₂, the spatial coordinate of vertex P₀ is (X₀, Y₀, Z₀), and the texture information is (U₀, V₀); the spatial coordinate of P₁ is (X₁, Y₁, Z₁), and the texture information is (U₁, V₁); the spatial coordinate of P₂ is (X₂, Y₂, Z₂), and the texture information is (U₂, V₂). FIG. 4 is a schematic diagram of the polygonal surface P in the embodiment shown in FIG. 3 of the present application being sliced by a slicing plane, as shown in FIG. 4, the slicing direction of the slicing plane in FIG. 4 is the Z axis direction, and the polygonal patch P intersects with the slicing plane Q at points M and N. The corresponding outer contour line of the slicing plane is obtained by connecting the intersection points of the slicing plane and multiple polygonal patches end-to-end.

S203, obtaining a contour area according to the at least one outer contour line and filling the contour area.

Specifically, the outer contour line defines a texture representation corresponding to a mapping thickness of a voxel, and it is not complete to use only the contour line to describe the mapping three dimensional model, therefore, it is necessary to extend the contour line to obtain the corresponding contour area. The contour area defines a texture representation of the mapping three dimensional model corresponding to the slice of the set mapping thickness, the use of the contour area to describe the mapping three dimensional model ensures the integrity of the mapping pattern and improves printing quality.

Specifically, the mapping thickness corresponding to different contour areas can be the same, that is, each contour area corresponds to a constant mapping thickness. Alternatively, the mapping thickness corresponding to different contour areas can be different, that is, each outer contour line can be expanded to a contour area with a variable mapping thickness.

Specifically, the contour area is filled, that is, the respective point within the contour area is assigned with texture information, and thereby the printing path corresponding to the respective slicing plane is obtained. The filled contour area is the outer layer corresponding to the mapping of the mapping three dimensional model.

Furthermore, the contour area may be filled based on a preset algorithm, the preset algorithm includes a directional parallel filling algorithm, a contour parallel filling algorithm, an inverse color filling algorithm, and other algorithms.

Specifically, the respective contour area may be filled based on the inverse color filling algorithm, the specific steps are: distinguishing between the contour area and the non-contour area, filling the contour area with a color, and filling the non-contour area corresponding to the contour area, that is, the filling area, with an inverse color of the contour area.

Exemplarily, black may be used to fill the contour area, while white may be used to fill the non-contour area.

S204, generating, according to the texture information, full color image data for coloring the filled contour area.

Specifically, the texture information of the respective point on the contour area is determined based on the spatial coordinate of the respective point, the above full color image data is generated based on the texture information of the respective point, thereby the contour area is colored based on the full color image data, and a full color mapping three dimensional model is obtained through 3D printing.

Furthermore, before obtaining the full color image data, the method further includes: determining the size and resolution of the full color image based on the hardware parameter of the three dimensional printing system, the hardware parameter includes a size of the printable area, a resolution of the three dimensional printer, an arrangement of an inkjet head, and other parameters. The contour area is mapped to the full color image based on the size and resolution of the full color image to obtain the full color image data corresponding to the full color image.

In the slicing method for the mapping three dimensional model provided in an embodiment of the present application, for the mapping three dimensional model, respective polygonal patches are obtained by parsing the file of the mapping three dimensional model, where at least one polygonal patch includes texture information of the mapping three dimensional model, the respective polygonal patches are sliced using a slicing plane, the respective intersecting points is connected end-to-end to obtain an outer contour line corresponding to the slicing plane, a contour area is obtained by contracting the outer contour line, the contour area is filled, and full color image data for coloring the respective contour area is generated based on the above texture information, and a colored mapping three dimensional model entity may be directly obtained by three dimensional printing based on the full color image data, so as to realize the automatic printing and colored printing of the mapping three dimensional model, and improve the printing efficiency and printing quality of the mapping three dimensional model.

Optionally, FIG. 5 is a flowchart of S201 shown in the embodiment shown in FIG. 2 of the present application, as shown in FIG. 5, S201 includes the following steps.

S2011, obtaining the file of the mapping three dimensional model.

The file of the mapping three dimensional model includes a texture library of the mapping three dimensional model, vertex coordinates of respective vertexes, and a polygon index. The format of the file of the mapping three dimensional model may be OBJ (object), PLY (polygon file format), AMF (action message format), and other formats.

Specifically, the file of the mapping three dimensional model may be automatically obtained through the preset interface of the modeling software. The modeling software may be installed on the modeling platform of the three dimensional printing system. Alternatively, the user may manually upload the file of the mapping three dimensional model to the three dimensional printing system or the three dimensional printer.

S2012, determining spatial coordinates of respective vertexes of the respective polygonal patches according to the vertex coordinates and the polygon index.

The vertex coordinate may include the spatial coordinate of the vertex, as well as the texture coordinate of the vertex. The spatial coordinate is used to describe position information of the respective vertex in the mapping three dimensional model. The texture coordinate is used to describe position information of the respective vertex in the texture image of the mapping three dimensional model. The polygon index is used to index the vertex corresponding to the respective polygonal patch, the spatial coordinate and texture coordinate of the vertex of the respective polygonal patch may be obtained according to the polygon index.

S2013, traversing the texture library according to the polygon index to obtain texture information of the respective vertexes of the respective polygonal patches.

The texture library includes a texture file or texture information corresponding to the respective vertex of the respective polygonal patch.

Specifically, based on the polygon index, the texture library can be traversed according to the spatial coordinate of the respective vertex to find texture information that matches the spatial coordinate of the vertex.

Furthermore, searching in the texture library based on the polygon index, and determining whether there is a texture file corresponding to the current polygonal patch; if it does not exist, setting the color value of the respective vertex of the polygonal patch to white; if it exists, determining the color value of the respective vertex of the polygonal patch based on the texture file.

Optionally, the traversing the texture library according to the polygon index to obtain the texture information of the respective vertexes of the respective polygonal patches includes:
determining a texture file corresponding to the respective polygonal patches according to the polygon index; for each vertex of each polygonal patch, when the vertex coordinate of the vertex includes a vertex texture coordinate, obtaining a texture image from the texture file, and determining the texture information of the vertex from the texture image according to the vertex texture coordinate of the vertex; and/or, for each vertex of each polygonal patch, when the vertex coordinate of the vertex does not comprise a vertex texture coordinate, obtaining a diffuse light color value in the texture file, and determining the texture information of the vertex as the diffuse light color value.

The texture file is a file that includes texture information describing the respective vertex.

Specifically, the texture file corresponding to the respective vertex may be determined based on the spatial coordinate or vertex coordinate of the vertex, as well as the polygon index mentioned above. If the vertex coordinate of the vertex includes the vertex texture coordinate of the vertex, the corresponding texture image may be directly extracted from the texture file based on the vertex texture coordinate, and the texture information of the vertex may be determined based on the texture image; if the vertex texture coordinate is not included in the vertex coordinate, indicating that the mapping three dimensional model does not specify the texture information of the point, the default texture information may be used as the texture information of the vertex, that is, the diffuse light color value in the corresponding texture file may be used as the texture information of the vertex.

Through the above indexing and traversing steps, the mapping relationships between the spatial coordinate, vertex texture coordinate, and color value of the respective vertex are determined. Thus, in the subsequent steps, the color value of the respective point may be quickly located based on the spatial coordinate of the vertex, which improves the speed for generating full color image data and thus improves the printing speed.

Specifically, taking the OBJ format of the file of the mapping three dimensional model as an example, the parsing the file of the mapping three dimensional model specifically includes:
checking whether the file format of the file of the mapping three dimensional model is correct through the file name suffix; if so, reading the content of the file of the mapping three dimensional model line by line; next, determining the keyword at the beginning of each line and performing a corresponding operation based on the keyword, the operation includes extracting the texture information, reading the spatial coordinate of the vertex, reading the texture coordinate of the vertex, and reading the polygon index; determining whether the line is the last line of the file of the mapping three dimensional model, if so, the parsing is completed and closing the file of the mapping three dimensional model with the current OBJ format.

Extracting the texture information: if the keyword is mtllib, opening a texture file with the suffix .mtl and reading the content of the texture file line by line; if the keyword at the beginning of the line is the first keyword, loading a texture image behind the first keyword into the memory to determine the texture information based on the texture image; if the keyword at the beginning of the line is the second keyword, loading a diffuse light color value behind the second keyword into the memory to determine a color value of a corresponding vertex as the diffuse light color value.

Reading the spatial coordinate of the vertex: if the keyword is v, which means that the current line represents the spatial coordinate of the vertex, the three floating point numbers behind the keyword may be used as the X, Y, and Z values of the spatial coordinate of the vertex, and stored in a spatial coordinate container.

Reading the texture coordinate of the vertex: if the keyword is vt, which means that the current line represents the vertex texture coordinate of the vertex, the two floating point numbers behind the keyword may be used as the U and V values of the vertex texture coordinate of the vertex, and stored in a texture coordinate container.

Reading the polygon index: if the keyword is f, which means that the current line represents the polygonal patch, multiple sets of v/vt pairs behind the keyword is parsed as the spatial coordinate index and texture coordinate index of the respective vertex that constituting the polygonal patch, so as to determine the spatial coordinate of the vertex based on the spatial coordinate index, and determine the vertex texture coordinate of the vertex based on the texture coordinate index.

It should be noted that when there is no texture mapping in some parts of the mapping three dimensional model, the vertex of the polygonal patch corresponding to these parts will not include the vertex texture coordinate.

In some embodiments, after the obtaining the respective polygonal patches for representing the mapping three dimensional model, the method further includes: sampling the respective polygonal patches to obtain a point cloud information set, where the point cloud information set includes a spatial coordinate and texture information of each sampling point. Correspondingly, the generating, according to the texture information, the full color image data for coloring the filled contour area includes:
determining a color value of a respective point of the filled contour area according to the point cloud information set and a spatial coordinate of the respective point in the filled contour area; and generating, according to the color value of the respective point of the filled contour area, the full color image data for coloring the filled contour area.

The point cloud information set includes the spatial coordinate and texture information of each sampling point.

Specifically, each polygonal patch may be segmented and sampled, including: sampling the respective edge of the polygonal patch and sampling the interior of the polygonal patch, the point cloud sampling algorithm for sampling the respective edge of the polygonal patch may be different from the point cloud sampling algorithm for sampling the interior of the polygonal patch.

Exemplarily, FIG. 6 is a schematic diagram of sampling the polygonal patch in the embodiment shown in FIG. 3 of the present application, as illustrated in FIG. 6, the spatial coordinate of each vertex P₀, P₁, and P₂ of the triangular patch P are obtained through the above parsing process, the sampling length interval is preset, such as 0.05mm, 0.03mm, or other values, the linear interpolation algorithm is used for sampling the respective edge of the triangular patch to obtain the spatial coordinate of the respective sampling point, and for the interior of the triangular patch, the internal point algorithm is used for calculating the spatial coordinate of the respective sampling point. The smallest rectangle that can contain the triangular patch is found, the rectangle is spliced according to the sampling length interval, whether the respective point is within or on the triangular patch is determined in turn, and for the respective point that is within or on the triangular patch, the spatial coordinate of the point is calculated.

Furthermore, the color value of the respective sampling point is obtained, the color value may be determined through the spatial coordinate and the texture library, if the texture library does not include the texture file of the polygonal patch, or the vertex coordinate of the polygonal patch does not include the vertex texture coordinate, then the color value of the respective sampling point in the polygonal patch is the same as the color value of the vertex of the polygonal patch; if there is a texture file of the polygonal patch in the texture library and the vertex of the polygonal patch includes the vertex texture coordinate, the sampling point texture coordinate of the sampling point may be determined based on the vertex texture coordinate of the vertex, thereby, based on the sampling point texture coordinate, the color value corresponding thereto may be determined from the texture image as the texture information of the sampling point.

Exemplarily, as shown in FIG. 3 and FIG. 4, the calculation method for the texture coordinate of the sampling point p is: firstly calculating the area of the triangular patch P: S = |P̅₀̅P̅₂̅ × P̅₀̅P̅₁̅|, and then calculating the component of the sampling point p on the respective edge of the triangular patch: S₀ = |p̅P̅₂̅ × p̅P̅₁̅|/S, S₁ = |p̅P̅₀̅ × p̅P̅₂̅|̅/S, S₂ = |p̅P̅₀̅ × p̅P̅₁̅/S, then the spatial coordinate of the sampling point p is: (X₀ * S₀ + X₁ * S₁ + X₂ * S₂, Y₀ * S₀ + Y₁ * S₁ + Y₂ * S₂, Z₀ * S₀ + Z₁ * S₁ + Z₂ * S₂), the sampling point texture coordinate is: (U_{0 *} S₀ + U₁ * S₁ + U_{2 *} S₂, V₀ * S₀ + V₁ * S₁ + V₂ * S₂).

In some embodiments, after the obtaining the respective polygonal patches for representing the mapping three dimensional model, the method further includes: for each polygonal patch, determining a respective adjacent polygonal patch of the polygonal patch, where the adjacent polygonal patch is connected to one of edges of the polygonal patch; generating a polygon topology structure according to the respective polygonal patch and the adjacent polygonal patch corresponding thereto. Correspondingly, the slicing the respective polygonal patches based on the slicing plane to obtain the at least one outer contour line corresponding to the slicing plane includes: slicing respective polygonal patches using the slicing plane to obtain intersection points between the slicing plane and the respective polygonal patches; and determining a connection order of the respective intersection points according to the polygon topology structure to obtain the at least one outer contour line corresponding to the slicing plane.

Specifically, the intersection point of the starting polygonal patch and a certain slicing plane may be obtained firstly, and then the intersection points of the respective polygonal patches and the slicing plane is connected in turn according to the order of the adjacent polygonal patch, if the mapping three dimensional model conforms to a manifold patch, then reverting back to the starting point, that is, the first intersection point, and forming the closed outer contour line; if there are holes and other structures in the mapping three dimensional model, it is necessary to separately connect the intersection points of each polygonal patch end-to-end to obtain the outer contour line corresponding to each outer contour line, as shown in FIG. 4.

By constructing the polygon topology structure, the speed of determining the outer contour line is accelerated, thereby improving the efficiency of three dimensional printing.

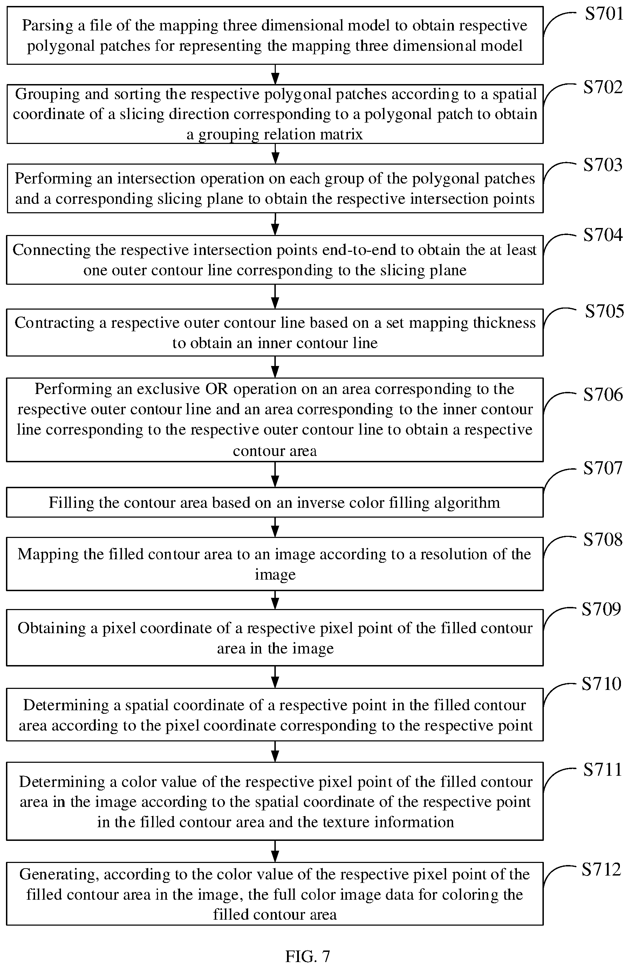

FIG. 7 is a flowchart of a slicing method for a mapping three dimensional model provided in another embodiment of the present application, the slicing method for the mapping three dimensional model provided in the embodiment further refines S202, S203, and S204 based on the embodiment shown in FIG. 2, as shown in FIG. 7, the slicing method for the mapping three dimensional model provided in the embodiment includes the following steps.

S701, parsing a file of the mapping three dimensional model to obtain respective polygonal patches for representing the mapping three dimensional model.

S702, grouping and sorting the respective polygonal patches according to a spatial coordinate of a slicing direction corresponding to a polygonal patch to obtain a grouping relation matrix.

The grouping relation matrix includes each group of the polygonal patches corresponding to each slicing plane. The slicing direction is usually the Z axis direction, and may also use the X axis or Y axis direction.

Specifically, for each slicing plane, the respective polygonal patches intersecting with the slicing plane are grouped and sorted according to the value of the spatial coordinate corresponding to the slicing direction, and the grouping of the polygonal patches corresponding to the slicing plane is obtained.

Furthermore, the serial number of the respective polygonal patches in its corresponding grouping may be determined according to the value of the spatial coordinate corresponding to the slicing direction, the smaller the value of the spatial coordinate, the smaller the corresponding serial number.

By traversing all the polygonal patches, the above grouping relation matrix can be established by taking the layer number of the slicing plane and the serial number of the grouping corresponding to the slicing plane as the indexes. The respective polygonal patches in the grouping corresponding to the respective layer of the slicing plane are described in the grouping relation matrix.

Exemplarily, Table 1 shows the grouping relation matrix in the embodiment shown in FIG. 7 of the present application, as shown in Table 1, the set or grouping of the polygonal patch corresponding to the respective layer of the slicing plane are described in the grouping relation matrix, and each group of the polygonal patch is sorted from small to large according to the value of the spatial coordinate corresponding to the slicing direction, that is, the Z value of the polygonal patch fᵢₐ is less than the Z value of the polygonal patch f_{ib}, where a is less than b.

**Table 1 Grouping Relation Matrix**

| Layer number of the slicing plane | Grouping of the polygon patch |
|---|---|
| i=1 | f₁₁ f₁₂ f₁₃ ··· f₁ₘ₁ |
| i=2 | f₂₁ f₂₂ f₂₃ ··· f₂ₘ₂ |
| ... | ... |
| i=n | fₙ₁ fₙ₂ fₙ₃ ··· fₙₘₙ |

S703, performing an intersection operation on each group of the polygonal patches and a corresponding slicing plane to obtain the respective intersection points.

S704, connecting the respective intersection points end-to-end to obtain the at least one outer contour line corresponding to the slicing plane.

S705, contracting a respective outer contour line based on a set mapping thickness to obtain an inner contour line.

The set mapping thickness may be set by the user or the default value can be used, the present application does not limit the value of the set mapping thickness.

Specifically, after obtaining the respective outer contour line, the respective outer contour line is contracted inwardly by the set mapping thickness to obtain an inner contour line corresponding to the respective outer contour line.

S706, performing an exclusive OR operation on an area corresponding to the respective outer contour line and an area corresponding to the inner contour line corresponding to the respective outer contour line to obtain a respective contour area.

Specifically, the contour area is consisted of the area corresponding to a set of the inner contour line and the outer contour line, which may be obtained by performing the exclusive OR operation on the area corresponding to the outer contour line and the area corresponding to the inner contour line.

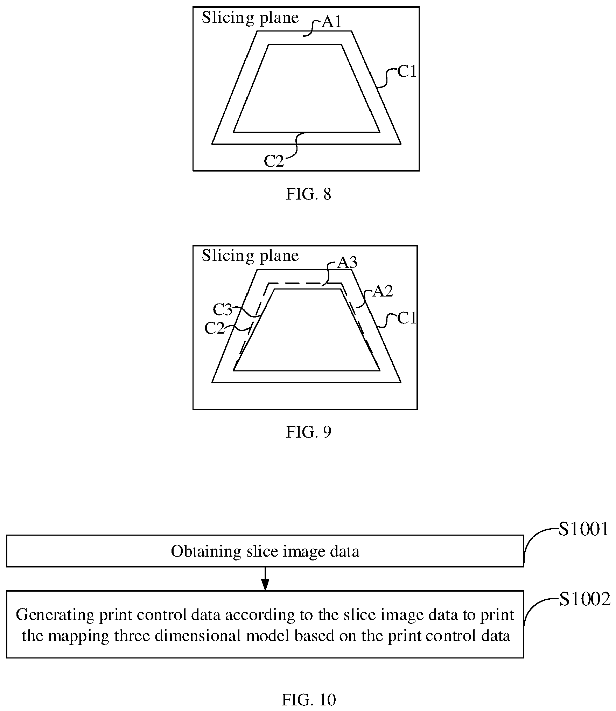

Exemplarily, FIG. 8 is a schematic diagram of a contour area in the embodiment shown in FIG. 7 of the present application, as shown in FIG. 8, the outer contour line corresponding to the intersection point of the polygonal patch and the slicing plane is C1, the outer contour line C1 is contracted inwardly to obtain the inner contour line C2, and the contour area A1 is the area between the outer contour line C1 and the inner contour line C2.

Furthermore, in order for the mapping pattern to be complete when the printed mapping three dimensional model is viewed from multiple angles, it is necessary to determine the contour area with a variable map thickness. Optionally, after the contracting the respective outer contour line based on the set mapping thickness to obtain the inner contour line, the method further includes: for each outer contour line, obtaining an associated outer contour line corresponding to a preset number of slicing plane above and below the slicing plane corresponding to the outer contour line based on the set mapping thickness and a set slicing thickness. Correspondingly, the performing the exclusive OR operation on the area corresponding to the respective outer contour line and the area corresponding to the inner contour line corresponding to the respective outer contour line to obtain the respective contour area includes: after performing an AND operation on the area corresponding to the inner contour line and an area corresponding to a respective associated outer contour line, performing the exclusive OR operation with the area corresponding to the corresponding outer contour line to obtain the respective contour area.

The preset number may be the number of the slicing plane corresponding to the set mapping thickness, and may be a positive integer corresponding to the ratio of the set mapping thickness to the slicing thickness. The associated outer contour line is the outer contour line of other slicing plane located within the same set mapping thickness near the current outer contour line.

By the outer contour line of multiple slicing planes above and below the current slicing plane, that is, the associated outer contour line, performing the AND operation on the area corresponding to the inner contour line and an area corresponding to each associated outer contour line to correct the inner contour line, and obtaining a new inner contour line that may contract more inward. And then performing the exclusive OR operation on an area corresponding to the new inner contour line and the area corresponding to the outer contour line to obtain the contour area.

Due to the fact that the mapping three dimensional model is formed by stacking multiple slice layers, when the mapping thickness is not thick enough or the contour line range of the slice above and below is too small, it is easy to expose the interior of the object, that is, the map pattern is incomplete. Therefore, it is necessary to adjust the inner contour line of the slicing plane of the current layer based on the outer contour line of the slice above and below, that is, the associated outer contour line, to obtain a contour area with a variable map thickness.

Exemplarily, FIG. 9 is another schematic diagram of a contour area in the embodiment shown in FIG. 7 of the present application, as can be seen in conjunction with FIG. 8 and FIG. 9, in the present embodiment, in addition to the inner contour line C2 and the outer contour line C1 in FIG. 8, there is also included an associated outer contour line C3, which is an outer contour line where the slicing plane above or below the slicing plane of the outer contour line C1 intersects with the polygonal patch, and after performing the AND operation on the area corresponding to the inner contour line C2 and the area corresponding to the associated outer contour line C3 to obtain the new inner contour line, the new contour area A2 is further obtained, and an additional contour area A3 has been added to the contour area A2 as compared to the contour area A1 in FIG. 8.

S707, filling the contour area based on an inverse color filling algorithm.

S708, mapping the filled contour area to an image according to a resolution of the image.

The image is used for printing the mapping three dimensional model, which may be the image provided by three dimensional printing that may accommodate the maximum outer contour of the mapping three dimensional model.

Specifically, after obtaining the respective contour area, the respective contour area is mapped to the image based on the resolution of the image.

Specifically, the size and resolution of the image may be determined according to the hardware parameter of the three dimensional printing system. The hardware parameter includes a size of the printable area, a resolution of the three dimensional printer, an arrangement of an inkjet head, and other parameters.

Furthermore, the contour area may be mapped to the image based on the position of the polygonal patch corresponding to the contour area and the resolution of the image.

S709, obtaining a pixel coordinate of a respective pixel point of the filled contour area in the image.

The pixel coordinate refers to the position of the pixel point corresponding to the respective point in the contour area in the image.

S710, determining a spatial coordinate of a respective point in the filled contour area according to the pixel coordinate corresponding to the respective point.

Specifically, since different colors are used for the contour area and the non-contour area (the filled region) during filling the contour area, it is possible to determine whether the respective pixel point is a point in the contour area according to the pixel value or color value of each pixel point.

For the respective pixel point belonging to the contour area, the spatial coordinate of the point in the contour area corresponding to the pixel point may be determined according to the pixel coordinate of the pixel and the resolution of the image.

S711, determining a color value of the respective pixel point of the filled contour area in the image according to the spatial coordinate of the respective point in the filled contour area and the texture information.

Specifically, after determining the spatial coordinate of the point in the contour area corresponding to the respective pixel point, for each pixel, based on the spatial coordinate corresponding to the pixel point, searching for a target point closest to the spatial coordinate in all polygonal patches, and setting the texture information or color value of the target point to the color value of the pixel point.

Furthermore, searching the color value of the respective pixel point by gathering point cloud information.

Furthermore, when it is determined that the pixel point does not belong to the contour area, for example, the color value of the pixel point may be set to the color value corresponding to white.

The color value of the respective pixel point is determined by traversing the respective pixel point in the image.

S712, generating, according to the color value of the respective pixel point of the filled contour area in the image, the full color image data for coloring the filled contour area.

In the present embodiment, after parsing the file of the mapping three dimensional model to obtain the respective polygonal patches, the respective polygonal patches are sliced based on the slicing plane to obtain the respective outer contour line, and the outer contour line is contracted to obtain a corresponding inner contour line, so as to obtain a contour area; in order to improve the integrity of the mapping pattern, the inner contour line can be corrected based on the outer contour line of the adjacent multiple slicing plane, so as to achieve a contour area with a variable map thickness; the contour area is further filled based on an inverse color filling algorithm to obtain an initial color value of the contour area and the non-contour area, and then the respective filled contour area is mapped to the image, the spatial coordinate of the respective pixel point is determined based on the pixel value of the respective pixel point in the image and the resolution of the image, the color value of the respective pixel point is further determined based on the spatial coordinate, so as to obtain the full color image data, and the respective contour area may be colored based on the full color image data during the dimensional printing of the mapping three dimensional model, so as to obtain a full color mapping three dimensional model, realize the colored printing and automatic printing of the mapping three dimensional model, and improve the printing efficiency and printing accuracy.

FIG. 10 is a flowchart of a printing method for a mapping three dimensional model provided in an embodiment of the present application, the printing method for the mapping three dimensional model provided in the embodiment is applicable to the three dimensional printer, as shown in FIG. 10, the printing method for the mapping three dimensional model provided in the embodiment includes the following steps.

S1001, obtaining slice image data.

The slice image data includes the full color image data generated by the slicing method for the mapping three dimensional model provided according to any embodiments corresponding to FIG. 2, FIG. 5, and FIG. 7 of the present application.

S1002, generating print control data according to the slice image data to print the mapping three dimensional model based on the print control data.

The printing method for the mapping three dimensional model provided in an embodiment of the present application realizes the colored printing and automatic printing of the mapping three dimensional model, and improves the printing efficiency and printing accuracy.

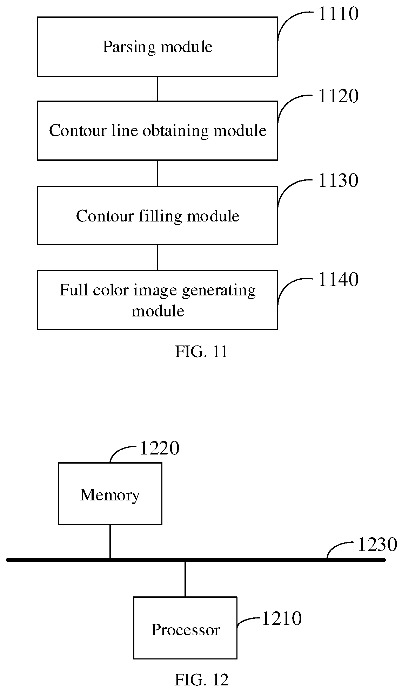

FIG. 11 is a structural schematic diagram of a slicing apparatus for a mapping three dimensional model provided in an embodiment of the present application, as shown in FIG. 11, the slicing apparatus for the mapping three dimensional model provided in the present embodiment includes: a parsing module 1110, a contour line obtaining module 1120, a contour filling module 1130, and a full color image generating module 1140.

The parsing module 1110 is configured to parse a file of the mapping three dimensional model to obtain respective polygonal patches for representing the mapping three dimensional model, where at least one polygonal patch includes texture information of the mapping three dimensional model; the contour line obtaining module 1120 is configured to slice the respective polygonal patches using a slicing plane to obtain at least one outer contour line corresponding to the slicing plane; the contour filling module 1130 is configured to obtain a contour area according to the at least one outer contour line and fill the contour area; and the full color image generating module 1140 is configured to generate, according to the texture information, full color image data for coloring the filled contour area.

Optionally, the contour filling module 1130 includes:
a contour area obtaining unit, configured to obtain a contour area according to the at least one outer contour line; and a filling unit, configured to fill the contour area.

Optionally, the contour area obtaining unit includes:
a contraction subunit, configured to contract a respective outer contour line based on a set mapping thickness to obtain an inner contour line; and a contour area obtaining subunit, configured to perform an exclusive OR operation on the area corresponding to the respective outer contour line and the area corresponding to the inner contour line corresponding to the respective outer contour line to obtain a respective contour area.

Optionally, the apparatus further includes:
an associated contour line obtaining module, configured to, after the contracting the respective outer contour line based on the set mapping thickness to obtain the inner contour line, for each outer contour line, obtain an associated outer contour line corresponding to a preset number of slicing plane above and below the slicing plane corresponding to the outer contour line based on the set mapping thickness and set slicing thickness.

Correspondingly, the contour area obtaining subunit is specifically configured to:
after performing an AND operation on the area corresponding to the inner contour line and an area corresponding to a respective associated outer contour line, perform the exclusive OR operation with the area corresponding to the corresponding outer contour line to obtain the respective contour area.

Optionally, the full color image generating module 1140 is specifically configured to:
map the filled contour area to an image according to a resolution of the image; obtain a pixel coordinate of a respective pixel point of the filled contour area in the image; determine a spatial coordinate of a respective point in the filled contour area according to the pixel coordinate corresponding to the respective point; determine a color value of the respective pixel point of the filled contour area in the image according to the spatial coordinate of the respective point in the filled contour area and the texture information; and generate, according to the color value of the respective pixel point of the filled contour area in the image, the full color image data for coloring the filled contour area.

Optionally, the parsing module 1110 includes:
a file obtaining unit, configured to obtain the file of the mapping three dimensional model, where the file of the mapping three dimensional model includes a texture library of the mapping three dimensional model, vertex coordinates of respective vertexes, and a polygon index; an index unit, configured to determine spatial coordinates of respective vertexes of the respective polygonal patches according to the vertex coordinates and the polygon index; and a texture information determining unit, configured to traverse the texture library according to the polygon index to obtain texture information of the respective vertexes of the respective polygonal patches.

Optionally, the texture information determining unit is specifically configured to:
determine a texture file corresponding to the respective polygonal patches according to the polygon index; for each vertex of each polygonal patch, when the vertex coordinate of the vertex includes a vertex texture coordinate, obtain a texture image from the texture file, and determining the texture information of the vertex from the texture image according to the vertex texture coordinate of the vertex; and/or, for each vertex of each polygonal patch, when the vertex coordinate of the vertex does not comprise a vertex texture coordinate, obtain a diffuse light color value in the texture file, and determine the texture information of the vertex as the diffuse light color value.

Optionally, the contour line obtaining module 1120 includes:
an intersection point obtaining unit, configured to perform an intersection operation on respective polygonal patches and the slicing plane to obtain respective intersection points; and a contour line obtaining unit, configured to connect the respective intersection points end-to-end to obtain the at least one outer contour line corresponding to the slicing plane.

Optionally, the apparatus further includes:
a grouping and sorting module, configured to, before the performing the intersection operation on the respective polygonal patches and the slicing plane to obtain the respective intersection points, group and sort the respective polygonal patches according to a spatial coordinate of a slicing direction corresponding to a polygonal patch to obtain a grouping relation matrix, where the grouping relation matrix includes each group of the polygonal patches corresponding to each slicing plane.

Correspondingly, the intersection point obtaining unit is specifically configured to:
perform an intersection operation on each group of the polygonal patches and a corresponding slicing plane to obtain the respective intersection points.

Optionally, the apparatus further includes:
a point cloud information set obtaining module, configured to, after the obtaining the respective polygonal patches for representing the mapping three dimensional model, sample the respective polygonal patches to obtain a point cloud information set, where the point cloud information set includes a spatial coordinate and texture information of each sampling point.

Correspondingly, the full color image generating module 1140 is specifically configured to:
determine a color value of a respective point of the filled contour area according to the point cloud information set and a spatial coordinate of the respective point in the filled contour area; and generate, according to the color value of the respective point of the filled contour area, the full color image data for coloring the filled contour area.

Optionally, the apparatus further includes:
a topology structure generating module, configured to, after the obtaining the respective polygonal patches for representing the mapping three dimensional model, for each polygonal patch, determine a respective adjacent polygonal patch of the polygonal patch, where the adjacent polygonal patch is connected to one of edges of the polygonal patch; generate a polygon topology structure according to the respective polygonal patch and the adjacent polygonal patch corresponding to the respective polygonal patch.

Correspondingly, the contour line obtaining module 1120 is specifically configured to:
slice respective polygonal patches using the slicing plane to obtain intersection points between the slicing plane and the respective polygonal patches; and determine a connection order of the respective intersection point according to the polygon topology structure to obtain the at least one outer contour line corresponding to the slicing plane.

Optionally, the filling unit is specifically configured to:
fill the contour area based on an inverse color filling algorithm.

The slicing apparatus for the mapping three dimensional model provided in the embodiment of the present application may execute the slicing method for the mapping three dimensional model provided in any embodiments corresponding to FIG. 2, FIG. 5, and FIG. 7 of the present application, and has the corresponding functional modules for executing the method and beneficial effects.

FIG. 12 is a structural schematic diagram of a three dimensional printing device provided in an embodiment of the present application, as shown in FIG. 12, the three dimensional printing device includes: a memory 1210, a processor 1220, and a computer program.

The computer program is stored in the memory 1210 and configured to be executed by the processor 1220 to implement the slicing method for the mapping three dimensional model provided in any embodiments corresponding to FIG. 2, FIG. 5, and FIG. 7 of the present application, and/or the printing method for the mapping three dimensional model provided in the embodiment shown in FIG. 10.

The memory 1210 and the processor 1220 are connected through a bus 1230.

The relevant explanations can be understood by referring to the corresponding descriptions and effects of the steps in FIG. 2, FIG. 5, FIG. 7 and FIG. 10, which will not be repeated here.

An embodiment of the present application provides a computer readable storage medium on which a computer program is stored, the computer program is executed by a processor to implement the slicing method for the mapping three dimensional model provided in any one of the embodiments corresponding to FIG. 2, FIG. 5, and FIG. 7 of the present application, and/or the printing method for the mapping three dimensional model provided in the embodiment shown in FIG. 10.

The computer readable storage medium may be a ROM, a random access memory (RAM), a CD-ROM, a magnetic tape, a floppy disk, and an optical data storage device, etc.

An embodiment of the present application provides a computer program product, including a computer program, which is executed by a processor of the three dimensional printing device to control the slicing apparatus for a mapping three dimensional model to implement the slicing method for the mapping three dimensional model provided in any of the embodiments corresponding to FIG. 2, FIG. 5 and FIG. 7 of the present application, and/or the printing method for the mapping three dimensional model provided in the embodiment shown in FIG. 10.

The processor may be an integrated circuit chip with a signal processing capability. The above mentioned processors can be a general purpose processor, including a central processing unit (CPU), a network processor (NP), etc. The disclosed methods, steps, and logical block diagrams in the embodiments of the present application can be implemented or executed. The general purpose processor can be a microprocessor or any conventional processor.

In the several embodiments provided in the present application, it should be understood that the disclosed apparatuses and methods can be implemented in other ways. For example, the apparatus embodiments described above are only schematic, for example, the division of modules is only a logical functional division, and there may be other division methods in actual implementation, such as multiple modules or components can be combined or integrated into another system, or some features can be ignored or not executed. On the other hand, the coupling or direct coupling or communication connection displayed or discussed between each other can be indirect coupling or communication connection through some interfaces, apparatuses or modules, which can be electrical, mechanical or other forms.

After considering the disclosure of the description and practices disclosed here, persons of skill in the art will easily come up with other implementation solutions of the present application. The purpose of the present application is to cover any variations, uses, or adaptive changes of the present application, which follow the general principles of the present application and include common knowledge or commonly used technical means in the technical field that are not disclosed in the present application. The description and embodiments are only considered exemplary, and the true scope and spirit of the present application are indicated in the claims.

It should be understood that this application is not limited to the precise structure already described above and shown in the accompanying drawings, and various modifications and changes can be made without departing from its scope. The scope of the present invention is limited only by the attached claims.

## Claims

1. A printing method for a mapping three dimensional model, comprising:
parsing (S201, S701) a file of the mapping three dimensional model to obtain respective polygonal patches for representing the mapping three dimensional model, wherein at least one polygonal patch comprises texture information of the mapping three dimensional model;
slicing (S202) the respective polygonal patches using a slicing plane to obtain at least one outer contour line corresponding to the slicing plane;
obtaining (S203) a contour area according to the at least one outer contour line and filling (S203) the contour area;
generating (S204), according to the texture information, full color image data for coloring the filled contour area;
obtaining (S1001) slice image data, wherein the slice image data comprises the full color image data; and
generating (S1002) print control data according to the slice image data to print the mapping three dimensional model based on the print control data;
**characterized in that**, the obtaining (S203) the contour area according to the at least one outer contour line comprises:
contracting (S705) a respective outer contour line based on a set mapping thickness to obtain an inner contour line;
for each outer contour line, obtaining an associated outer contour line on the slicing plane of the outer contour line and the inner contour line, the associated outer contour line corresponding to a preset number of slicing plane above and below the slicing plane corresponding to the outer contour line based on the set mapping thickness and a set slicing thickness, wherein the associated outer contour line is an outer contour line of another slicing plane located within the set mapping thickness near the current outer contour line;
performing an AND operation on an area corresponding to the inner contour line and an area corresponding to the respective associated outer contour line to obtain a new inner contour line that contracts more inward, and performing an exclusive OR operation with an area corresponding to the corresponding outer contour line and an area corresponding to the new inner contour line to obtain the respective contour area.

2. The method according to claim 1, wherein the generating (S204), according to the texture information, the full color image data for coloring the filled contour area comprises:
mapping (S708) the filled contour area to an image according to a resolution of the image;
obtaining (S709) a pixel coordinate of a respective pixel point of the filled contour area in the image;
determining (S710) a spatial coordinate of a respective point in the filled contour area according to the pixel coordinate corresponding to the respective point;
determining (S711) a color value of the respective pixel point of the filled contour area in the image according to the spatial coordinate of the respective point in the filled contour area and the texture information; and
generating (S712), according to the color value of the respective pixel point of the filled contour area in the image, the full color image data for coloring the filled contour area.

3. The method according to claim 1, wherein the parsing (S201, S701) the file of the mapping three dimensional model comprises:
obtaining (S2011) the file of the mapping three dimensional model, wherein the file of the mapping three dimensional model comprises a texture library of the mapping three dimensional model, vertex coordinates of respective vertexes, and a polygon index;
determining (S2012) spatial coordinates of respective vertexes of the respective polygonal patches according to the vertex coordinates and the polygon index; and
traversing (S2013) the texture library according to the polygon index to obtain texture information of the respective vertexes of the respective polygonal patches.

4. The method according to claim 3, wherein the traversing (S2013) the texture library according to the polygon index to obtain the texture information of the respective vertexes of the respective polygonal patches comprises:
determining a texture file corresponding to the respective polygonal patches according to the polygon index;
for each vertex of each polygonal patch, when the vertex coordinate of the vertex comprises a vertex texture coordinate, obtaining a texture image from the texture file, and determining the texture information of the vertex from the texture image according to the vertex texture coordinate of the vertex; and/or,
for each vertex of each polygonal patch, when the vertex coordinate of the vertex does not comprise a vertex texture coordinate, obtaining a diffuse light color value in the texture file, and determining the texture information of the vertex as the diffuse light color value.

5. The method according to any one of claims 1 to 4, wherein the slicing (S202) the respective polygonal patches using the slicing plane to obtain the at least one outer contour line corresponding to the slicing plane comprises:
performing an intersection operation on the respective polygonal patches and the slicing plane to obtain respective intersection points; and
connecting (S704) the respective intersection points end-to-end to obtain the at least one outer contour line corresponding to the slicing plane.

6. The method according to claim 5, wherein before the performing the intersection operation on the respective polygonal patches and the slicing plane to obtain the respective intersection points, the method further comprises:
grouping and sorting (S702) the respective polygonal patches according to a spatial coordinate of a slicing direction corresponding to a polygonal patch to obtain a grouping relation matrix, wherein the grouping relation matrix comprises each group of the polygonal patches corresponding to each slicing plane;
correspondingly, the performing the intersection operation on the respective polygonal patches and the slicing plane to obtain the respective intersection points comprises:
performing (S703) an intersection operation on each group of the polygonal patches and a corresponding slicing plane to obtain the respective intersection points.

7. The method according to any one of claims 1 to 4, wherein after the obtaining the respective polygonal patches for representing the mapping three dimensional model, the method further comprises:
sampling the respective polygonal patches to obtain a point cloud information set, wherein the point cloud information set comprises a spatial coordinate and texture information of each sampling point;
correspondingly, the generating (S204), according to the texture information, the full color image data for coloring the filled contour area comprises:
determining a color value of a respective point of the filled contour area according to the point cloud information set and a spatial coordinate of the respective point in the filled contour area; and
generating, according to the color value of the respective point of the filled contour area, the full color image data for coloring the filled contour area.

8. The method according to any one of claims 1 to 4, wherein after the obtaining the respective polygonal patches for representing the mapping three dimensional model, the method further comprises:
for each polygonal patch, determining a respective adjacent polygonal patch of the polygonal patch, wherein the adjacent polygonal patch is connected to one of edges of the polygonal patch;
generating a polygon topology structure according to the respective polygonal patch and the adjacent polygonal patch corresponding to the respective polygonal patch;
correspondingly, the slicing (S202) the respective polygonal patches using the slicing plane to obtain the at least one outer contour line corresponding to the slicing plane comprises:
slicing the respective polygonal patches using the slicing plane to obtain intersection points between the slicing plane and the respective polygonal patches; and
determining a connection order of the respective intersection points according to the polygon topology structure to obtain the at least one outer contour line corresponding to the slicing plane.

9. The method according to any one of claims 1 to 4, wherein the filling (S203) the contour area comprises:
filling (S707) the contour area based on an inverse color filling algorithm;
wherein the filling (S707) the contour area based on the inverse color filling algorithm comprises:
distinguishing between the contour area and a non-contour area, filling the contour area with a color, and filling the non-contour area corresponding to the contour area with an inverse color of the contour area.

10. The method according to claim 7, wherein the sampling the respective polygonal patches comprises:
sampling respective edge of the polygonal patch and sampling interior of the polygonal patch;
wherein the determining the color value of the respective point of the filled contour area comprises:
determining, if there is a texture file of the polygonal patch corresponding to the sampling point in the texture library and the vertex of the polygonal patch corresponding to the sampling point comprises the vertex texture coordinate, sampling point texture coordinate of the sampling point based on the vertex texture coordinate of the vertex; and determining, based on the sampling point texture coordinate, the color value corresponding to the sampling point texture coordinate.

11. A three dimensional printing device, comprising: a memory (1220) and at least one processor (1210),
the memory (1220) stores computer executable instructions; and
the at least one processor (1210) executes the computer executable instructions stored in the memory (1220) to enable the at least one processor (1210) to execute the printing method for the mapping three dimensional model according to any one of claims 1 to 10.

12. A computer readable storage medium, wherein the computer readable storage medium stores computer executable instructions, which when executed by a processor being used to implement the printing method for the mapping three dimensional model according to any one of claims 1 to 10.

## Patentansprüche

1. Druckverfahren für ein dreidimensionales Abbildungsmodell, umfassend:
Parsen (S201, S701) einer Datei des dreidimensionalen Abbildungsmodells, um jeweilige polygonale Patches zum Darstellen des dreidimensionalen Abbildungsmodells zu erlangen,
wobei mindestens ein polygonales Patch Texturinformationen des dreidimensionalen Abbildungsmodells umfasst;
Schneiden (S202) der jeweiligen polygonalen Patches unter Verwendung einer Schneideebene, um mindestens eine äußere Konturlinie zu erlangen, die der Schneideebene entspricht;
Erlangen (S203) einer Konturfläche gemäß der mindestens einen äußeren Konturlinie und Füllen (S203) der Konturfläche;
Erzeugen (S204) von Vollfarbbilddaten zum Einfärben der gefüllten Konturfläche gemäß den Texturinformationen;
Erlangen (S1001) von Schichtbilddaten, wobei die Schichtbilddaten die Vollfarbbilddaten umfassen; und
Erzeugen (S1002) von Drucksteuerdaten gemäß den Schichtbilddaten, um das dreidimensionale Abbildungsmodell auf der Grundlage der Drucksteuerdaten zu drucken;
**dadurch gekennzeichnet, dass** das Erlangen (S203) der Konturfläche gemäß der mindestens einen äußeren Konturlinie Folgendes umfasst:
Zusammenziehen (S705) einer jeweiligen äußeren Konturlinie auf der Grundlage einer festgelegten Abbildungsdicke, um eine innere Konturlinie zu erlangen;
für jede äußere Konturlinie, Erlangen einer zugeordneten äußeren Konturlinie auf der Schneideebene der äußeren Konturlinie und
der inneren Konturlinie, wobei die zugeordnete äußere Konturlinie einer voreingestellten Anzahl von Schneideebenen oberhalb und unterhalb der Schneideebene entspricht, die der äußeren Konturlinie entspricht, auf der Grundlage der eingestellten Abbildungsdicke und einer eingestellten Schneidedicke, wobei die zugeordnete äußere Konturlinie eine äußere Konturlinie einer anderen Schneideebene ist, die sich innerhalb der eingestellten Abbildungsdicke nahe der aktuellen äußeren Konturlinie befindet;
Durchführen einer UND-Verknüpfung mit einer Fläche, die der inneren Konturlinie entspricht, und einer Fläche, die der jeweiligen zugeordneten äußeren Konturlinie entspricht, um eine neue innere Konturlinie zu erlangen, die sich mehr nach innen zusammenzieht, und Durchführen einer Exklusiv-ODER-Verknüpfung mit einer Fläche, die der jeweiligen äußeren Konturlinie entspricht, und einer Fläche, die der neuen inneren Konturlinie entspricht, um die jeweilige Konturfläche zu erlangen.

2. Verfahren nach Anspruch 1, wobei das Erzeugen (S204) der Vollfarbbilddaten zum Einfärben der gefüllten Konturfläche gemäß den Texturinformationen Folgendes umfasst:
Abbilden (S708) der gefüllten Konturfläche auf ein Bild gemäß einer Auflösung des Bildes;
Erlangen (S709) einer Pixelkoordinate eines jeweiligen Pixelpunkts der gefüllten Konturfläche in dem Bild;
Bestimmen (S710) einer räumlichen Koordinate eines jeweiligen Punkts in der gefüllten Konturfläche gemäß der dem jeweiligen Punkt entsprechenden Pixelkoordinate;
Bestimmen (S711) eines Farbwerts des jeweiligen Pixelpunkts der gefüllten Konturfläche in dem Bild gemäß der räumlichen Koordinate des jeweiligen Punkts in der gefüllten Konturebene und der Texturinformationen; und
Erzeugen (S712) der Vollfarbbilddaten zum Einfärben der gefüllten Konturfläche gemäß dem Farbwert des jeweiligen Pixelpunkts der gefüllten Konturfläche in dem Bild.

3. Verfahren nach Anspruch 1, wobei das Parsen (S201, S701) der Datei des dreidimensionalen Abbildungsmodells Folgendes umfasst:
Erlangen (S2011) der Datei des dreidimensionalen Abbildungsmodells, wobei die Datei des dreidimensionalen Abbildungsmodells eine Texturbibliothek des dreidimensionalen Abbildungsmodells, Scheitelpunktkoordinaten von jeweiligen Scheitelpunkten und einen Polygonindex umfasst;
Bestimmen (S2012) von Raumkoordinaten von jeweiligen Scheitelpunkten der jeweiligen polygonalen Patches gemäß den Scheitelpunktkoordinaten und dem Polygonindex; und
Durchlaufen (S2013) der Texturbibliothek gemäß dem Polygonindex, um Texturinformationen der jeweiligen Scheitelpunkte der jeweiligen polygonalen Patches zu erlangen.

4. Verfahren nach Anspruch 3, wobei das Durchlaufen (S2013) der Texturbibliothek gemäß dem Polygonindex, um Texturinformationen der jeweiligen Scheitelpunkte der jeweiligen polygonalen Patches zu erlangen Folgendes umfasst:
Bestimmen einer Texturdatei, die den jeweiligen polygonalen Patches entspricht, gemäß dem Polygonindex;
für jeden Scheitelpunkt jedes polygonalen Patches, wenn die Scheitelpunktkoordinate eine Scheitelpunkttexturkoordinate umfasst, Erlangen eines Texturbilds aus der Texturdatei und
Bestimmen der Texturinformationen des Scheitelpunkts aus dem Texturbild gemäß der Scheitelpunkttexturkoordinate des Scheitelpunkts; und/oder,
für jeden Scheitelpunkt jedes polygonalen Patches, wenn die Scheitelpunktkoordinate des Scheitelpunkts keine Scheitelpunkttexturkoordinate umfasst, Erlangen eines Diffuslichtfarbwerts in der Texturdatei und Bestimmen der Texturinformationen des Scheitelpunkts als den Diffuslichtfarbwert.

5. Verfahren nach einem der Ansprüche 1 bis 4, wobei das Schneiden (S202) der jeweiligen polygonalen Patches unter Verwendung der Schneideebene, um die mindestens eine äußere Konturlinie zu erlangen, die der Schneideebene entspricht, Folgendes umfasst:
Durchführen einer Schnittoperation an den jeweiligen polygonalen Patches und der Schnittebene, um jeweilige Schnittpunkte zu erlangen; und
Verbinden (S704) der jeweiligen Schnittpunkte Ende an Ende, um die mindestens eine äußere Konturlinie zu erlangen, die der Schneideebene entspricht.

6. Verfahren nach Anspruch 5, wobei das Verfahren vor dem Durchführen der Schnittoperation an den jeweiligen polygonalen Patches und der Schneideebene, um die jeweiligen Schnittpunkte zu erlangen, ferner Folgendes umfasst:
Gruppieren und Sortieren (S702) der jeweiligen polygonalen Patches gemäß einer räumlichen Koordinate einer Schneiderichtung,
die einem polygonalen Patch entspricht, um eine Gruppierungsbeziehungsmatrix zu erlangen, wobei die Gruppierungsbeziehungsmatrix jede Gruppe der polygonalen Patches umfasst, die jeder Schneideebene entspricht;
dementsprechend umfasst das Durchführen der Schnittoperation an den jeweiligen polygonalen Patches und der Schneideebene, um jeweilige Schnittpunkte zu erlangen Folgendes:
Durchführen (S703) der Schnittoperation an jeder Gruppe der polygonalen Patches und einer jeweiligen Schnittebene, um die jeweiligen Schnittpunkte zu erlangen.

7. Verfahren nach einem der Ansprüche 1 bis 4, wobei das Verfahren nach dem Erlangen der jeweiligen polygonalen Patches zur Darstellung des dreidimensionalen Abbildungsmodells ferner Folgendes umfasst:
Abtasten der jeweiligen polygonalen Patches, um einen Punktwolken-Informationssatz zu erlangen, wobei der Punktwolken-Informationssatz eine räumliche Koordinate und Texturinformationen jedes Abtastpunkts umfasst;
dementsprechend umfasst das Erzeugen (S204) der Vollfarbbilddaten zum Einfärben der gefüllten Konturfläche gemäß den Texturinformationen Folgendes:
Bestimmen eines Farbwerts des jeweiligen Pixelpunkts der gefüllten Konturfläche in dem Bild gemäß der räumlichen Koordinate des jeweiligen Punkts in der gefüllten Konturebene und der Texturinformationen; und
Erzeugen der Vollfarbbilddaten zum Einfärben der gefüllten Konturfläche gemäß dem Farbwert des jeweiligen Punkts der gefüllten Konturfläche.

8. Verfahren nach einem der Ansprüche 1 bis 4, wobei das Verfahren nach dem Erlangen der jeweiligen polygonalen Patches zum Darstellen des dreidimensionalen Abbildungsmodells ferner Folgendes umfasst:
für jedes polygonale Patch, Bestimmen eines jeweiligen benachbarten polygonalen Patches des polygonalen Patches, wobei das benachbarte polygonale Patch mit einer der Kanten des polygonalen Patches verbunden ist;
Erzeugen einer Polygontopologiestruktur gemäß dem jeweiligen polygonalen Patch und dem benachbarten polygonalen Patch, das dem jeweiligen polygonalen Patch entspricht;
dementsprechend umfasst das Schneiden (S202) der jeweiligen polygonalen Patches unter Verwendung einer Schneidebene, um mindestens eine äußere Konturlinie zu erlangen, die der Schneideebene entspricht, Folgendes:
Schneiden der jeweiligen polygonalen Patches unter Verwendung der Schneideebene, um Schnittpunkte zwischen der Schneideebene und den jeweiligen polygonalen Patches zu erlangen; und
Bestimmen einer Verbindungsreihenfolge der jeweiligen Schnittpunkte gemäß der Polygontopologiestruktur, um die mindestens eine äußere Konturlinie zu erlangen, die der Schneidebene entspricht.

9. Verfahren nach einem der Ansprüche 1 bis **4,** wobei das Füllen (S203) der Konturfläche Folgendes umfasst:
Füllen (S707) der Konturfläche auf der Grundlage eines inversen Farbfüllalgorithmus;
wobei das Füllen (S707) der Konturfläche auf der Grundlage eines inversen Farbfüllalgorithmus Folgendes umfasst:
Abgrenzen der Konturfläche und einer Nicht-Konturfläche, Füllen der Konturfläche mit einer Farbe und Füllen der Nicht-Konturfläche, die der Konturfläche entspricht, mit einer inversen Farbe der Konturfläche.

10. Verfahren nach Anspruch **7,** wobei das Abtasten der jeweiligen polygonalen Patches Folgendes umfasst:
Abtasten der jeweiligen Kante des polygonalen Patches und Abtasten des Inneren des polygonalen Patches;
wobei das Bestimmen des Farbwerts des jeweiligen Punkts der gefüllten Konturfläche Folgendes umfasst:
Bestimmen, wenn es eine Texturdatei des polygonalen Patches, die dem Abtastpunkt entspricht, in der Texturbibliothek gibt und der Scheitelpunkt des polygonalen Patches, der dem Abtastpunkt entspricht, die Scheitelpunkt-Texturkoordinate umfasst, der Abtastpunkt-Texturkoordinate des Abtastpunkts basierend auf der Scheitelpunkt-Texturkoordinate des Scheitelpunkts; und
Bestimmen, basierend auf der Abtastpunkt-Texturkoordinate, des Farbwerts, der der Abtastpunkt-Texturkoordinate entspricht.

11. Dreidimensionale Druckvorrichtung, umfassend: einen Speicher (1220) und mindestens einen Prozessor (1210),
wobei der Speicher (1220) computerausführbare Anweisungen speichert; und
der mindestens eine Prozessor (1210) die in dem Speicher (1220) gespeicherten computerausführbaren Anweisungen ausführt, um den mindestens einen Prozessor (1210) in die Lage zu versetzen, das Druckverfahren für das dreidimensionale Abbildungsmodell nach einem der Ansprüche 1 bis 10 auszuführen.

12. Computerlesbares Speichermedium, wobei das computerlesbare Speichermedium computerausführbare Anweisungen speichert, die, wenn sie von einem Prozessor ausgeführt werden, verwendet werden, um das Druckverfahren für das dreidimensionale Abbildungsmodell nach einem der Ansprüche 1 bis 10 zu implementieren.

## Revendications

1. Procédé d'impression d'un modèle tridimensionnel de mappage, comprenant :
l'analyse (S201, S701) d'un fichier du modèle tridimensionnel de mappage pour obtenir des surfaces polygonales respectives pour représenter le modèle tridimensionnel de mappage, au moins une surface polygonale comprenant des informations de texture du modèle tridimensionnel de mappage ;
le découpage (S202) des surfaces polygonales respectives à l'aide d'un plan de découpage pour obtenir au moins une ligne de contour extérieure correspondant au plan de découpage ;
l'obtention (S203) d'une zone de contour selon la ou les lignes de contour extérieures et le remplissage (S203) de la zone de contour ;
la génération (S204), selon les informations de texture, de données d'image en pleine couleur pour colorer la zone de contour remplie ;
l'obtention (S1001) de données d'image de tranche, les données d'image de tranche comprenant les données d'image en pleine couleur ; et
la génération (S1002) de données de contrôle d'impression en fonction des données d'image de tranche pour imprimer le modèle tridimensionnel de mappage sur la base des données de contrôle d'impression ;
**caractérisé en ce que** l'obtention (S203) de la zone de contour selon la ou les lignes de contour extérieures comprend :
la contraction (S705) d'une ligne de contour extérieure respective sur la base d'une épaisseur de mappage définie pour obtenir une ligne de contour intérieure ;
pour chaque ligne de contour extérieure, l'obtention d'une ligne de contour extérieure associée sur le plan de découpage de la ligne de contour extérieure et de la ligne de contour intérieure, la ligne de contour extérieure associée correspondant à un nombre prédéfini de plans de découpage au-dessus et au-dessous du plan de découpage correspondant à la ligne de contour extérieure en fonction de l'épaisseur de mappage définie et
d'une épaisseur de découpage définie, la ligne de contour extérieure associée étant une ligne de contour extérieure d'un autre plan de découpage situé dans l'épaisseur de mappage définie à proximité de la ligne de contour extérieure actuelle ;
la réalisation d'une opération ET sur une zone correspondant à la ligne de contour intérieure et une zone correspondant à la ligne de contour extérieure associée respective pour obtenir une nouvelle ligne de contour intérieure qui se contracte davantage vers l'intérieur, et effectuer une opération OU exclusif avec une zone correspondant à la ligne de contour extérieure correspondante et une zone correspondant à la nouvelle ligne de contour intérieure pour obtenir la zone de contour respective.

2. Procédé selon la revendication 1, dans lequel la génération (S204), selon les informations de texture, des données d'image en pleine couleur pour colorer la zone de contour remplie comprend :
le mappage (S708) de la zone de contour remplie sur une image en fonction d'une résolution de l'image ;
l'obtention (S709) d'une coordonnée de pixel d'un point de pixel respectif de la zone de contour remplie dans l'image ;
la détermination (S710) d'une coordonnée spatiale d'un point respectif dans la zone de contour remplie en fonction de la coordonnée de pixel correspondant au point respectif ;
la détermination (S711) d'une valeur de couleur du point de pixel respectif de la zone de contour remplie dans l'image en fonction de la coordonnée spatiale du point respectif dans la zone de contour remplie et des informations de texture ; et
la génération (S712), en fonction de la valeur de couleur du point de pixel respectif de la zone de contour remplie dans l'image, les données d'image en pleine couleur pour colorer la zone de contour remplie.

3. Procédé selon la revendication 1, dans lequel l'analyse (S201, S701) du fichier du modèle tridimensionnel de mappage comprend :
l'obtention (S2011) du fichier du modèle tridimensionnel de mappage, le fichier du modèle tridimensionnel de mappage comprenant une bibliothèque de textures du modèle tridimensionnel de mappage, les coordonnées de sommet de sommets respectifs et un indice de polygone ;
la détermination (S2012) des coordonnées spatiales de sommets respectifs des surfaces polygonales respectives en fonction des coordonnées des sommets et de l'indice de polygone ; et
le parcours (S2013) de la bibliothèque de textures en fonction de l'indice de polygone pour obtenir des informations de texture des sommets respectifs des surfaces polygonales respectives.

4. Procédé selon la revendication 3, dans lequel le parcours (S2013) de la bibliothèque de textures en fonction de l'indice de polygone pour obtenir les informations de texture des sommets respectifs des surfaces polygonales respectives comprend :
la détermination d'un fichier de texture correspondant aux surfaces polygonales respectives en fonction de l'indice de polygone ;
pour chaque sommet de chaque surface polygonale, lorsque la coordonnée de sommet du sommet comprend une coordonnée de texture de sommet, l'obtention d'une image de texture à partir du fichier de texture et la détermination des informations de texture du sommet à partir de l'image de texture en fonction de la coordonnée de texture de sommet du sommet ; et/ou,
pour chaque sommet de chaque surface polygonale, lorsque la coordonnée de sommet du sommet ne comprend pas une coordonnée de texture de sommet, l'obtention d'une valeur de couleur de lumière diffuse dans le fichier de texture, et la détermination des informations de texture du sommet comme valeur de couleur de lumière diffuse.

5. Procédé selon l'une quelconque des revendications 1 à 4, dans lequel le découpage (S202) des surfaces polygonales respectives à l'aide du plan de découpage pour obtenir au moins une ligne de contour extérieure correspondant au plan de découpage comprend :
la réalisation d'une opération d'intersection sur les surfaces polygonales respectives et le plan de découpage pour obtenir des points d'intersection respectifs ; et
la connexion (S704) des points d'intersection respectifs bout à bout pour obtenir l'au moins une ligne de contour extérieure correspondant au plan de découpage.

6. Procédé selon la revendication 5, dans lequel, avant la réalisation de l'opération d'intersection sur les surfaces polygonales respectives et le plan de découpage pour obtenir les points d'intersection respectifs, le procédé comprend en outre :
le regroupement et le tri (S702) des surfaces polygonales respectives en fonction d'une coordonnée spatiale d'une direction de découpage correspondant à une surface polygonale pour obtenir une matrice de relations de regroupement, la matrice de relations de regroupement comprenant chaque groupe de surfaces polygonales correspondant à chaque plan de découpage ;
de manière correspondante, la réalisation de l'opération d'intersection sur les surfaces polygonales respectives et le plan de découpage pour obtenir les points d'intersection respectifs comprend :
la réalisation (S703) d'une opération d'intersection sur chaque groupe des surfaces polygonales respectives et un plan de découpage correspondant pour obtenir des points d'intersection respectifs.

7. Procédé selon l'une quelconque des revendications 1 à 4, dans lequel, après l'obtention des surfaces polygonales respectives pour représenter le modèle tridimensionnel de mappage, le procédé comprend en outre :
l'échantillonnage des surfaces polygonales respectives pour obtenir un ensemble d'informations de nuage de points,
l'ensemble d'informations de nuage de points comprenant une coordonnée spatiale et des informations de texture de chaque point d'échantillonnage ;
de manière correspondante, la génération (S204), selon les informations de texture, des données d'image en pleine couleur pour colorer la zone de contour remplie comprend :
la détermination d'une valeur de couleur du point respectif de la zone de contour remplie en fonction de l'ensemble d'informations de nuage de points et d'une coordonnée spatiale du point respectif dans la zone de contour remplie ; et
la génération, en fonction de la valeur de couleur du point respectif de la zone de contour remplie, les données d'image en pleine couleur pour colorer la zone de contour remplie.

8. Procédé selon l'une quelconque des revendications 1 à 4, dans lequel, après l'obtention des surfaces polygonales respectives pour représenter le modèle tridimensionnel de mappage, le procédé comprend en outre :
pour chaque surface polygonale, la détermination d'une surface polygonale adjacente respective de la surface polygonale, la surface polygonale adjacente étant connectée à l'un des bords de la surface polygonale ;
la génération d'une structure de topologie polygonale en fonction de la surface polygonale respective et de la surface polygonale adjacente correspondant à la surface polygonale respective ;
de manière correspondante, le découpage (S202) des surfaces polygonales respectives à l'aide du plan de découpage pour obtenir l'au moins une ligne de contour extérieure correspondant au plan de découpage comprend :
le découpage des surfaces polygonales respectives à l'aide du plan de découpage pour obtenir des points d'intersection entre le plan de découpage et les surfaces polygonales respectives ; et
la détermination d'un ordre de connexion des points d'intersection respectifs en fonction de la structure de topologie polygonale pour obtenir l'au moins une ligne de contour extérieure correspondant au plan de découpage.

9. Procédé selon l'une quelconque des revendications 1 à 4, dans lequel le remplissage (S203) de la zone de contour comprend :
le remplissage (S707) de la zone de contour sur la base d'un algorithme de remplissage de couleur inverse ;
dans lequel le remplissage (S707) de la zone de contour sur la base d'un algorithme de remplissage de couleur inverse comprend :
la distinction entre la zone de contour et une zone sans contour, le remplissage de la zone de contour avec une couleur et le remplissage de la zone sans contour correspondant à la zone de contour avec une couleur inverse à celle de la zone de contour.

10. Procédé selon la revendication 7, dans lequel l'échantillonnage des surfaces polygonales respectives comprend :
l'échantillonnage du bord respectif de la surface polygonale et l'échantillonnage de l'intérieur de la surface polygonale ;
dans lequel la détermination de la valeur de couleur du point respectif de la zone de contour remplie comprend :
la détermination, s'il existe un fichier de texture de la surface polygonale correspondant au point d'échantillonnage dans la bibliothèque de textures et si le sommet de la surface polygonale correspondant au point d'échantillonnage comprend la coordonnée de texture de sommet, de la coordonnée de texture de point d'échantillonnage du point d'échantillonnage sur la base de la coordonnée de texture de sommet du sommet ; et la détermination,
sur la base de la coordonnée de texture de point d'échantillonnage, de la valeur de couleur correspondant à la coordonnée de texture de point d'échantillonnage.

11. Dispositif d'impression tridimensionnelle, comprenant : une mémoire (1220) et au moins un processeur (1210),
la mémoire (1220) stocke des instructions exécutables par ordinateur ; et
l'au moins un processeur (1210) exécute les instructions exécutables par ordinateur stockées dans la mémoire (1220) pour permettre à l'au moins un processeur (1210) d'exécuter le procédé d'impression pour le modèle tridimensionnel de mappage selon l'une quelconque des revendications 1 à 10.

12. Support de stockage lisible par ordinateur, dans lequel le support de stockage lisible par ordinateur stocke des instructions exécutables par ordinateur, qui, lorsqu'elles sont exécutées par un processeur utilisé pour mettre en œuvre le procédé d'impression pour le modèle tridimensionnel de mappage selon l'une quelconque des revendications 1 à 10.
